# EUROPÄISCHE PATENTANMELDUNG

(11) **EP 3 817 132 A1**
(43) Veröffentlichungstag der Anmeldung: **05.05.2021**
(21) Anmeldenummer: 20196292.5
(22) Anmeldetag: 15.09.2020
(51) Int. Cl.: H01M 50/256, H01M 50/249, H01M 50/271, B60L 53/80

(54) **DECKELMODUL FÜR EIN BATTERIEGEHÄUSE**

(30) Priorität: 16.09.2019 DE 102019124874
(71) Anmelder: Jungheinrich Aktiengesellschaft, 22047 Hamburg (DE)
(72) Erfinder: SCHÖLER, Susanne, 22955 Hoisdorf (DE); VON WERDER, Martin, 22949 Ammersbek (DE)
(74) Vertreter: Hauck Patentanwaltspartnerschaft mbB

(57) **Zusammenfassung**

Die Erfindung betrifft ein Deckelmodul für ein Batteriegehäuse eines Flurförderzeugs mit mindestens zwei Leistungskontakten zur Versorgung des Flurförderzeugs mit elektrischer Leistung und mit mindestens einem Steckerrahmen für einen elektrischen Steckverbinder zur Übermittlung von Steuersignalen an das Flurförderzeug, dadurch gekennzeichnet, dass mindestens eine Befestigungsaufnahme und mindestens ein korrespondierendes Tragmittel vorgesehen sind, das lösbar über die Befestigungsaufnahme mit der Batterie verbindbar ist und im verbundenen Zustand ein Anheben der Batterie erlaubt.

## Beschreibung

Die vorliegende Erfindung betrifft ein Deckelmodul für ein Batteriegehäuse eines Flurförderzeugs.

Elektrisch betriebene Flurförderzeuge besitzen einen elektrischen Energiespeicher, der bei einer Ausgestaltung als eine Lithium-Ionen-Batterie während ihres Einsatzes im Flurförderzeug verbleibt. Der elektrische Energiespeicher ist bei einem Flurförderzeug als eine Batterie mit einem Batteriegehäuse ausgebildet, in dem einzelne Batteriemodule mit ihren Batteriestacks und weiteren elektronischen Komponenten für den Betrieb des Energiespeichers angeordnet sind. Obwohl Lithium-Ionen-Batterien nicht mehr für den Ladevorgang aus dem Flurförderzeug entfernt werden müssen, ist es erforderlich, die Batterien bei der Montage des Fahrzeugs und bei Servicefällen aus dem Fahrzeug herauszuheben.

Der Erfindung liegt die Aufgabe zugrunde ein Deckelmodul bereitzustellen, das den Umgang mit der Batterie bei der Wartung und der Montage erleichtert.

Erfindungsgemäß wird die Aufgabe durch ein Deckelmodul mit den Merkmalen aus Anspruch 1 gelöst. Vorteilhafte Ausgestaltungen bilden die Gegenstände der Unteransprüche.

Das erfindungsgemäße Deckelmodul ist vorgesehen und bestimmt ein Batteriemodulgehäuse eines Flurförderzeugs zu verschließen. Das Deckelmodul weist mindestens zwei Leistungskontakte zur Versorgung des Flurförderzeugs mit elektrischer Leistung und mindestens einen Steckerrahmen für einen elektrischen Steckverbinder zur Übermittlung von Steuersignalen des Flurförderzeugs auf. Erfindungsgemäß ist mindestens eine Befestigungsaufnahme und mindestens ein korrespondierendes Tragmittel vorgesehen, das lösbar über die Befestigungsaufnahme mit dem Batteriemodul verbindbar ist und im verbundenen Zustand ein Anheben des Batteriemoduls erlaubt. Das erfindungsgemäße Deckelmodul schafft die Möglichkeit, Tragmittel an diesem zu befestigen und das gesamte Batteriemodul über das Tragmittel am Deckelmodul zu heben und zu bewegen. Dieses Tragmittel ist lösbar mit dem Deckelmodul verbunden und kann bei der Montage und im Servicefall eingesetzt und anschließend wieder entfernt werden. Beide Aspekte erleichtern die Handhabung des Energiespeichers. Zudem schafft das erfindungsgemäße Deckelmodul die Möglichkeit weitere vorteilhafte Funktionen zu integrieren, für die sonst gesonderte Bauteile erforderliche gewesen wären.

In einer erfindungsgemäßen Weiterentwicklung weist die Befestigungsaufnahme des Deckelmoduls mindestens eine Gewindehülse auf. Als Tragmittel für diese Gewindehülse ist eine Gewindeöse vorgesehen. Gewindeösen, gelegentlich auch als Kranösen bezeichnet, besitzen einen mit einem Gewinde versehenen Schaft, der in eine Öse übergeht. Über die Öse kann beispielsweise mit einem entsprechenden Haken, der Energiespeicher angehoben werden. Wird die Gewindeöse nicht länger benötigt an dem Energiespeicher, so kann diese aus der Gewindehülse herausgeschraubt und von dem Flurförderzeug entfernt werden.

Alternativ oder zusätzlich kann die mindestens eine Befestigungsaufnahme eine Hülse aufweisen. Als Tragmittel für die Hülse ist ein Kugeltragbolzen vorgesehen, der in seinen Abmessungen an die Hülse der Befestigungsaufnahme angepasst ist. Der Kugeltragbolzen wird zur Verbindung mit dem Deckelmodul in die Hülse eingesetzt und dort befestigt. Das freie Ende des Kugeltragbolzens besitzt beispielsweise eine Öse oder einen Haken, mit dem der gesamte Energiespeicher über das Deckelmodul angehoben und bewegt werden kann. Die Verwendung eines Kugeltragbolzens schafft eine erhebliche Zeiteinsparung bei der Montage.

In einer bevorzugten Ausgestaltung besteht das Deckelmodul aus Kunststoff, wobei die Gewindehülse und/oder die Hülse für den Kugeltragbolzen in das Kunststoffmaterial eingearbeitet ist. Die Einarbeitung kann hierbei erfolgen, in dem die Gewindehülse und/oder die Hülse für den Kugeltragbolzen in ein Kunststoffmaterial des Deckelmoduls eingespritzt oder eingegossen ist.

In einer bevorzugten Ausgestaltung besitzt das Deckelmodul eine rechteckige Grundform, bei der die Befestigungsaufnahmen in den Ecken angeordnet sind. Bevorzugt ist ein Paar von Befestigungsaufnahmen vorgesehen, die einander diagonal gegenüberliegend auf der Grundform angeordnet sind.

In einer vorteilhaften Weiterbildung sind Druck- und Kraftausgleichssegmente an dem Deckelmodul vorgesehen. Die Druck- und Kraftausgleichssegmente sind auf einer zum Energiespeicher weisenden Seite vorgesehen. Die Druck- und Kraftausgleichssegmente weisen eine Vielzahl von miteinander verbundenen Stegen auf. Bevorzugt bilden die miteinander verbundenen Stege geschlossene Konturen, wie beispielsweise wabenförmige Strukturen. Die aus den miteinander verbundenen Stegen gebildeten Strukturen verteilen die über das oder die Tragmittel angreifenden Kräfte auf das Deckelmodul, wodurch dieses den Energiespeicher sicher heben und transportieren kann.

In einer bevorzugten Ausgestaltung sind die Druck- und Kraftausgleichssegmente auf der von dem Energiespeicher fort weisenden Seite als ein vorstehender Abschnitt ausgebildet, der auf seiner zum Energiespeicher weisenden Seite mit den verbundenen Stegen ausgestattet ist. Diese Ausgestaltung erlaubt eine besonders platzsparende Ausbildung des Deckelmoduls, bei der die eingeleiteten Kräfte für Befestigung und Anheben des Energiespeichers an den vorstehenden Abschnitten eingeleitet werden. In einer bevorzugten Weiterbildung besitzen die vorstehenden Abschnitte Vertiefungen für die Verbindungsaufnahmen. Die Vertiefungen helfen platzsparend das Deckelmodul auszugestalten.

In einer bevorzugten Weiterbildung ist zusätzlich mindestens eine Verbindungsaufnahme vorgesehen, durch die das Deckelmodul über ein Verbindungsmittel mit dem Energiespeicher lösbar verbunden werden kann. Die Verbindungsaufnahme kann ähnlich wie die Befestigungsaufnahme ausgebildet sein. Auch im Hinblick auf die zu tragende Last bei einem Anheben des Energiespeichers, wird dessen Gewichtskraft über das Verbindungsmittel und die Verbindungsaufnahme in das Deckelmodul eingeleitet.

In einer bevorzugten Weiterbildung können auch noch weitere Elemente aus dem Inneren des Energiespeichers in vorteilhafter Weise in ihrer Funktion integriert werden. So können beispielsweise elektrische Sicherungen und/oder ein Batteriemanagementsystem an dem Deckelmodul befestigt sein, wodurch gesonderte oder zusätzliche Bauteile für den Energiespeicher entfallen können. Auch kann in vorteilhafter Weise eine Dichtung für das Batteriegehäuse an dem Deckelmodul befestigt sein.

Besonders vorteilhaft ist die Verwendung des Deckelmoduls in einem Flurförderzeug mit einem Energiespeicher, dessen Deckelmodul nach einem der vorstehenden Ansprüche ausgebildet ist. In einem solchen Flurförderzeug können ein oder mehrere Pufferelemente vorgesehen sein, die in einer Betriebsposition gegen das Deckelmodul vorgespannt sind. Die Pufferelemente sind bevorzugt elastisch ausgebildet und in der Betriebsposition gegen das Batteriemodul vorgespannt, um dieses in seiner Position zu sichern.

Das erfindungsgemäße Deckelmodul wird nachfolgend an einem Ausführungsbeispiel näher erläutert. Es zeigen:
- Figur 1: ein Deckelmodul als nicht mit dem Energiespeicher verbundenes Modul in einer Ansicht auf die von dem Energiespeicher abgewandten Seite,
- Figur 2: eine Ansicht eines Deckelmoduls aus Figur 1 auf die dem Energiespeicher zugewandte Seite,
- Figuren 3a, 3b: das Deckelmodul aus Figur 1 auf ein Batteriegehäuse montiert, wobei Figur 3b einen aufgeklappten Zustand zeigt,
- Figuren 4a, 4b: das Deckelmodul auf einem größeren Batteriegehäuse, wobei Figur 4b einen aufgeklappten Zustand zeigt,
- Figur 5: eine alternative Ausgestaltung der Unterseite für das Deckelmodul,
- Figur 6: in einer Explosionsdarstellung ein Deckelmodul zusammen mit seinen Gewindehülsen und Hülsen für Kugeltragbolzen und
- Figur 7: in einer schematischen Ansicht Pufferelemente, die das Deckelmodul in eine Position vorspannen.

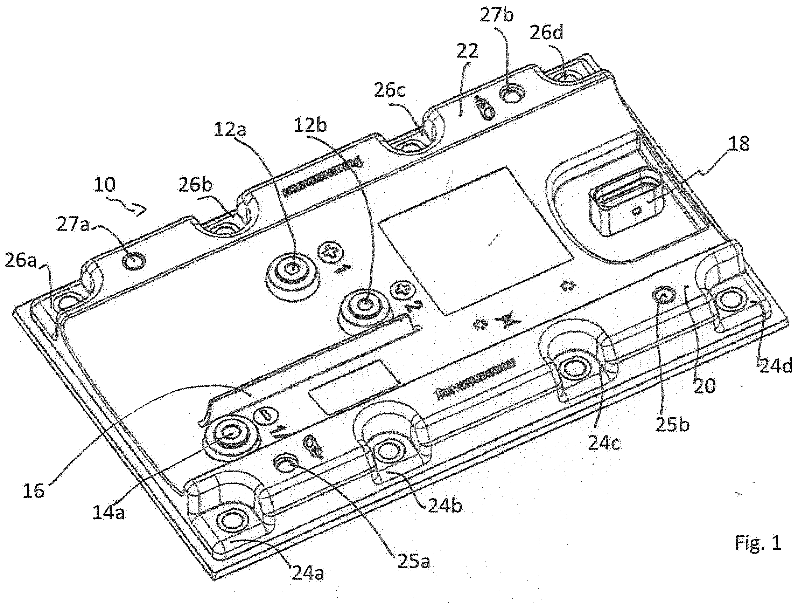

Figur 1 zeigt ein Deckelmodul 10 für ein Batteriegehäuse in einer Ansicht auf die Oberseite. Das Deckelmodul besitzt zwei positive Leistungskontakte 12a, 12b und einen negativen Leistungskontakt 14a. Über die Leistungskontakte 12, 14 kann der Energiespeicher mit elektrischen Verbrauchern im Flurförderzeug verbunden werden. Der positive Leistungskontakt 12b ist von dem negativen Leistungskontakt 14a über eine Trennwand 16 getrennt, wodurch eine versehentliche Kontaktierung der entgegengesetzt gepolten Leistungskontakte vermieden wird.

Das Deckelmodul besitzt ferner eine Befestigungsaufnahme 18, die als ein vorstehender Abschnitt ausgebildet ist, der einen elektrischen Steckverbinder (nicht dargestellt) aufnimmt. Über den elektrischen Steckverbinder, können Steuersignale und Betriebszustände der Batterie mit einer Steuerung des Flurförderzeugs und/oder einem Ladegerät für die Batterie ausgetauscht werden.

Das Deckelmodul 10 besitzt eine im Wesentlichen rechteckige Grundform, wobei entlang der Längsseiten vorstehende Abschnitte 20, 22 vorgesehen sind. Im Bereich der vorstehenden Abschnitte 20, 22 besitzt das Deckelmodul 10 eine größere Höhe als in seinem zentralen Bereich, in dem sich die Leistungskontakte 12, 14 und der Steckerrahmen 18 befindet. Die vorstehenden Vorsprünge 20, 22 besitzen Vertiefungen 24a bis d und 26a bis d. Die Vertiefungen sind einander gegenüberliegend an der Längsseite des Deckelmoduls in den vorstehenden Abschnitten 20, 22 angeordnet. Die Befestigungsaufnahmen 25a, b und 27a, b nehmen Tragmittel auf.

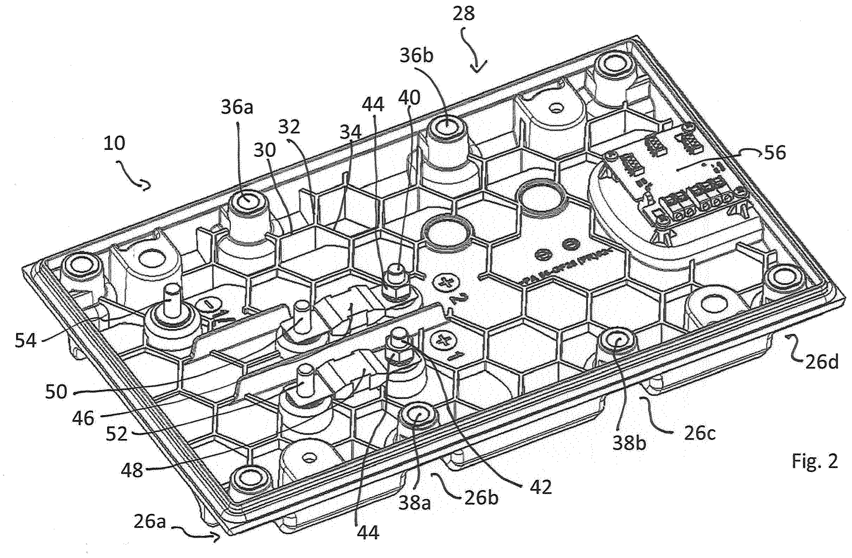

Figur 2 zeigt das Deckelmodul 10 von seiner Unterseite. Zu erkennen sind die Vertiefungen 26a bis d in dem vorstehenden Vorsprung 20. Ebenfalls zu erkennen sind wabenförmige Druck- und Ausgleichssegmente 28 mit ihren Streben 30, die sich in einer ersten Richtung erstrecken. Die Streben 30 münden in zwei unter gleichem Winkel abgehende Streben 32, 34, die wiederum unter gleichem Winkel in zwei weitere Streben übergehen. Wobei eine dieser Streben sich wieder in der ersten Längsrichtung erstreckt. Die Streben bilden insgesamt eine sechseckige geschlossene Form, an die sich unter gemeinsamer Nutzung einer der Streben eine weitere Wabe in sechseckiger Form anschließt. Die aus Stegen 30, 32, 34 bestehende Form ist nicht auf eine bestimmte Geometrie festgelegt, sondern hat zur Aufgabe eine angreifende Last an dem Deckelmodul gleichmäßig zu verteilen.

Figur 2 Verbindungsaufnahmen 24, 26 aus Figur 1 in einer Ansicht auf der Öffnungen 36 und 38. Die Verbindungsaufnahmen besitzen jeweils eine formschlüssig in einem Kunststoffmaterial des Deckelmoduls angeordnete Hülse, die ein längliches Verbindungselement aufnimmt, wie nachfolgend noch beschrieben wird. Die in die Verbindungsaufnahme eingearbeiteten Hülsen, können je nach Ausgestaltung ein Innengewinde besitzen, es ist aber auch denkbar, dass lediglich das Batteriegehäuse ein entsprechendes Gewinde für eine Schraube als Verbindungsmittel besitzt.

In Figur 2 ist ferner zu erkennen, dass die Leistungskontakte 12a, 12b auf der Rückseite ein vorstehendes Kontaktelement 40, 42 besitzen, an dem über jeweils eine Mutter 44 eine Sicherung 48, 50 angesetzt ist, die zu einem internen Kontaktstift 50, 52 führt, der nicht von der Außenseite der Batterie kontaktiert werden kann, sondern nur für eine Kontaktierung aus dem Batterieinneren heraus zur Verfügung steht.

Der zweite Leistungskontakt 14a besitzt auf seiner Rückseite ebenfalls ein vorstehenden Kontaktstift 54, der von der Batterieinnenseite her kontaktiert werden kann. Ferner ist in Figur 2 eine Platine 56 zu erkennen, über die Signale für den elektrischen Steckverbinder aufgearbeitet werden. Ein Batteriemanagementsystem kann ebenfalls auf einer Platine an dem Deckelmodul angeordnet sein.

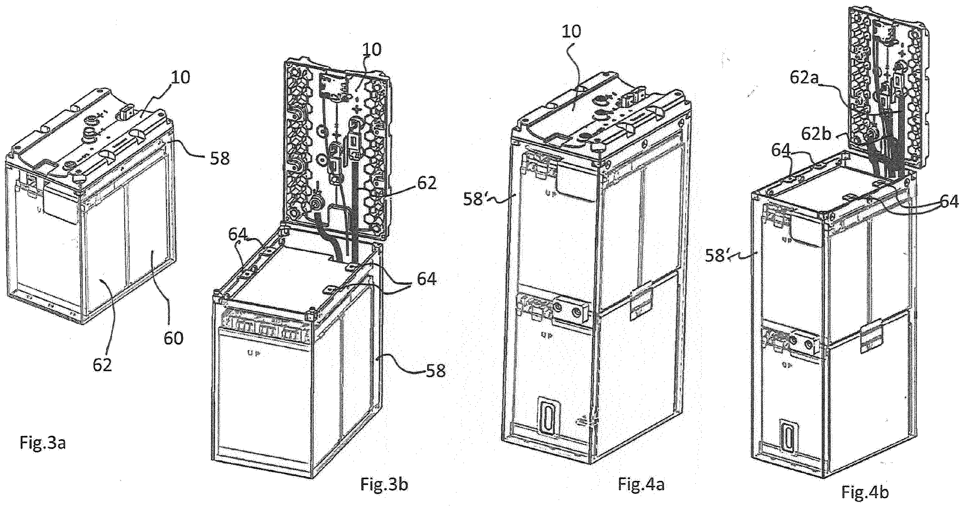

Figuren 3a, b zeigen in einer schematischen Ansicht die Verwendung des Deckelmoduls 10. Figur 3a zeigt ein Batteriegehäuse 58 mit einem Deckelmodul 10. Das Batteriegehäuse 58 ist transparent dargestellt und es ist zu erkennen, dass ein Stack mit zwei ungefähr gleich große quaderförmige Batteriezellanordnungen 60, 62 in dem Batteriegehäuse 58 angeordnet sind. Die Montage des Energiespeichers aus Figur 3a erfolgt in der in Figur 3b dargestellten Position. Das Deckelmodul 10 ist aufgestellt und Leitungen 62 von den Stacks und/oder den Batteriemodulen können mit diesem elektrisch leitend verbunden werden. Nachfolgend wird das Deckelmodul 10 auf dem Batteriegehäuse 58 angeordnet und mit diesem verbunden. Die Verbindung erfolgt über die vorstehenden Laschen 64 an dem Batteriegehäuse 58 zusammen mit den Verbindungsaufnahmen 36a, b, 38a, b.

Figuren 4a und b zeigen das Deckelmodul 10 für ein größeres Batteriegehäuse 58'. Das Batteriegehäuse 58' kann im Vergleich zum Batteriegehäuse 58 zwei Batteriestacks aufnehmen, wobei jeder dieser Stacks das Volumen wie in Figur 3a, b besitzt. Auch für das Batteriegehäuse 58' erfolgt die elektrische Kontaktierung auf der Innenseite. Die Leitungen 62a, 62b verbinden die Stacks aus dem Batteriegehäuse 58' mit dem Deckelmodul 10' und damit mit dessen Kontakten.

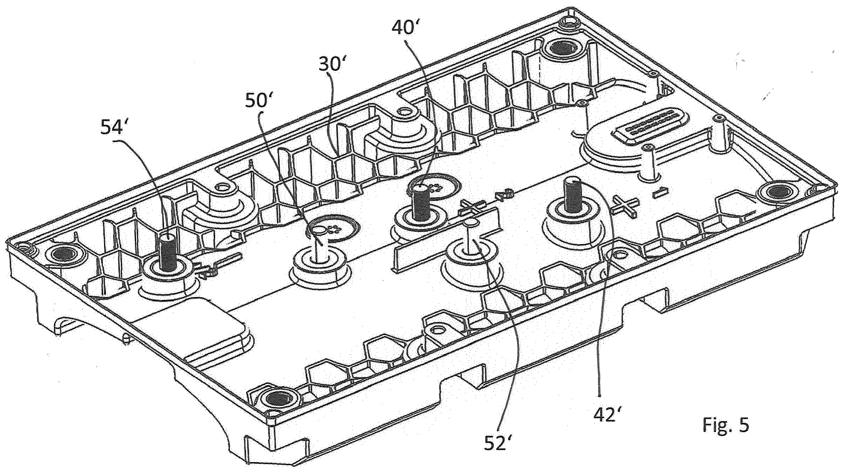

Figur 5 zeigt eine alternative Ausgestaltung für ein Deckelmodul 10' dessen Druck- und Kraftausgleichssegmente 30' eine geringere Breite besitzen und mit ihren Waben eine kleinere Fläche überdecken. Deutlich zu erkennen ist auch, dass die Leistungskontakte 40', 42' sowie 54', an anderen Positionen des Deckelmoduls 10 angeordnet sind. Ebenso die internen Kontaktstifte 50' und 52'.

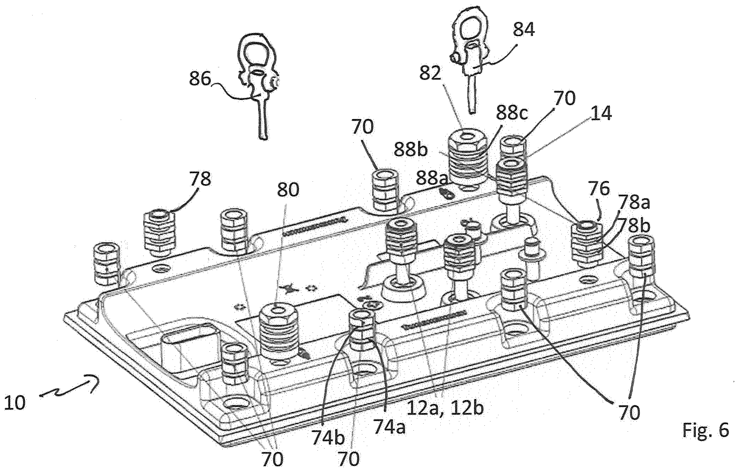

Figur 6 zeigt das Deckelmodul 10 in einer Explosionsdarstellung. Die dargestellten Hülsen, Anschlüsse und Einleger sind sämtlich in das Kunststoffmaterial des Deckelmoduls eingegossen oder bevorzugt eingespritzt. Hierzu im Einzelnen: das Deckelmodul 10 besitzt 8 Distanzhülsen 70, die in den Aufnahmen 24a bis d, 26a bis d in das Kunststoffmaterial eingearbeitet sind. Die Distanzhülsen 70, die teilweise auch die Leistungskontakte zeigen, besitzen jeweils eine längliche annähernd zylindrische Form mit einer Abflachung 72 und zwei umlaufenden Einschnürungen 74a, b. Die Abflachung 72 verhindert eine Drehung der Distanzhülse um ihre Längsachse, während die Einschnürung 74a, 74b der Distanzhülse Halt in Längsrichtung geben. Weitere Einlegeteile besitzen ebenfalls einen länglichen Aufbau mit einer oder mehreren Abflachungen und Einschnürungen, um dem umspritzten Einlegeteil Halt zu geben. Ferner besitzt das Deckelmodul 10 zwei längliche Einleger 76, 78, die mit einem Innengewinde (nicht dargestellt) versehen sind. Die Einleger erlauben es, eine Kranöse, beispielsweise mit einem M10-Gewinde in den Einleger einzuschrauben. Der Einleger besitzt zwei horizontale Einschnürungen 78a, b, zudem ist der Außenumfang des Einlegers 76 sechseckig ausgebildet. In seinem eingegossenen Zustand kann der Einleger sowohl ein großes Drehmoment, als auch eine große Zuglast aufnehmen und über den vorstehenden Abschnitt gleichmäßig verteilt in das Deckelmodul 10 einleiten. Zusätzlich zu den Einlegern 76, 78 für die Kranöse sind auch Einleger 80, 82 für schematisch dargestellte Kugeltragbolzen 84, 86 dargestellt. Die Einleger 80, 82 für die Kugeltragbolzen besitzen drei horizontale Vertiefungen 88a, b, c und zu mindestens in einem oberen Abschnitt eine sechseckige Kontur, die den eingegossenen Einleger gegen ein Verdrehen sichert. Die Einleger 80, 82 werden in die Befestigungsaufnahmen 27b und 25a eingearbeitet, bevorzugt umspritzt. Die Einleger 76, 78 für die Kranösen sind in die Befestigungsaufnahmen 27a und 25b eingearbeitet, also bevorzugt mit Kunststoffmaterial umspritzt.

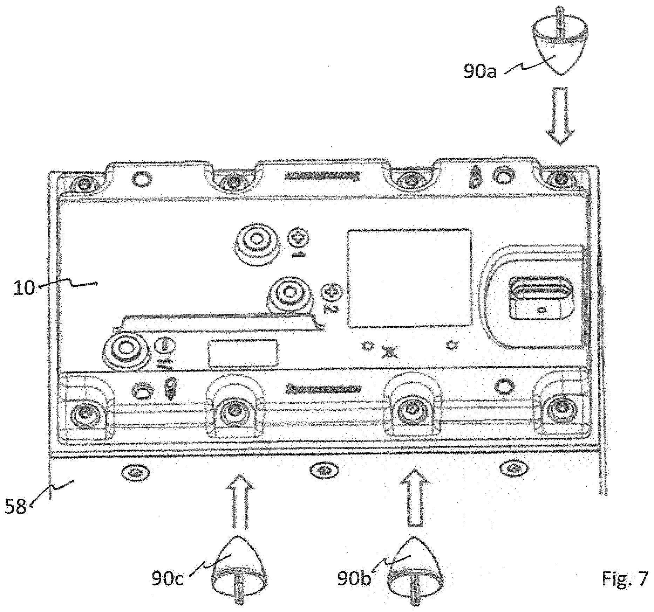

Figur 7 zeigt das verschlossene Batteriegehäuse 58 mit einem Deckelmodul 10, das durch drei Pufferelemente 90a, b, c in seiner Position in dem Flurförderzeug gesichert ist. In der Betriebsposition sind die Pufferelemente 90 a bis c vorgespannt und halten so die Batteriemodule sicher in ihrer Position.

Bei der Benutzung des erfindungsgemäßen Deckelmoduls ist vorgesehen, dieses wie in den Figuren 3 und 4 dargestellt, mit den elektrischen Leitungen aus den Batteriemodulen zu verbinden und anschließend das Deckelmodul zu verschließen. Das Deckelmodul dichtet dabei das Batteriegehäuse ab, dies kann auch unter Verwendung einer umlaufenden Dichtung erfolgen. Für die nachfolgende Handhabung können dann Kugeltragbolzen in die Einleger 80, 82 eingesetzt werden und die gesamte Batterie mit deren Hilfe angehoben und bewegt werden. Alternativ oder zusätzlich ist es auch möglich, in die Einleger 76, 78 Kranösen zu schrauben und so die Batterie anzuheben und zu montieren. Ist die Batterie in Position gebracht, können die Tragmittel, also die Kugeltragbolzen oder die Kranösen entfernt werden.

### Bezugszeichenliste

- 10: Deckelmodul
- 10': Deckelmodul
- 12a: positiver Leistungskontakt
- 12b: positiver Leistungskontakt
- 14a: negativer Leistungskontakt
- 16: Trennwand
- 18: Befestigungsaufnahme
- 20: Vorsprung
- 22: Vorsprung
- 24a-d: Vertiefungen
- 25a, b: Befestigungsaufnahmen
- 26a-d: Vertiefungen
- 27a, b: Befestigungsaufnahmen
- 28: Druck- und Ausgleichssegment
- 30: Streben (Druck- und Kraftausgleichssegment)
- 32: abgehende Streben
- 34: abgehende Streben
- 36a, b: Befestigungsaufnahme
- 38a, b: Verbindungsaufnahmen
- 40: Kontaktelement
- 40': Kontaktelement
- 42: Kontaktelement
- 42': Kontaktelement
- 44: Mutter
- 48: Sicherung
- 50: Sicherung
- 50': Kontaktstift
- 52: Kontaktstift
- 52': Kontaktstift
- 54: Kontaktstift
- 54': Kontaktelement
- 56: Platine
- 58: Batteriegehäuse
- 58': Batteriegehäuse
- 60: Batteriekörper
- 62: Batteriekörper
- 62a: Leitung
- 62b: Leitung
- 64: Laschen
- 70: Distanzhülse
- 72: Abflachung
- 74a, b: Einschnürungen
- 76: Einleger
- 78: Einleger
- 78a, b: horizontale Einschnürungen
- 80: Einleger
- 82: Einleger
- 84: Kugeltragbolzen
- 86: Kugeltragbolzen
- 88a-c: horizontale Vertiefungen
- 90a-c: Pufferelemente

## Patentansprüche

1. Deckelmodul (10, 10') für ein Batteriegehäuse (58, 58') eines Flurförderzeugs mit mindestens zwei Leistungskontakten (12a, 12b, 14a) zur Versorgung des Flurförderzeugs mit elektrischer Leistung und mit mindestens einem Steckerrahmen für einen elektrischen Steckverbinder zur Übermittlung von Steuersignalen an das Flurförderzeug, **dadurch gekennzeichnet, dass** mindestens eine Befestigungsaufnahme (18, 25a, 25b, 27a, 27b, 36a, 36b) und mindestens ein korrespondierendes Tragmittel vorgesehen sind, das lösbar über die Befestigungsaufnahme (18, 25a, 25b, 27a, 27b, 36a, 36b) mit der Batterie verbindbar ist und im verbundenen Zustand ein Anheben der Batterie erlaubt.

2. Deckelmodul (10, 10') nach Anspruch 1, **dadurch gekennzeichnet, dass** die mindestens eine Befestigungsaufnahme (18, 25a, 25b, 27a, 27b, 36a, 36b) eine Gewindehülse aufweist und als Tragmittel eine Gewindeöse vorgesehen ist.

3. Deckelmodul (10, 10') nach Anspruch 1 oder 2, **dadurch gekennzeichnet, dass** die mindestens eine Befestigungsaufnahme (18, 25a, 25b, 27a, 27b, 36a, 36b) eine Hülse aufweist und als Tragmittel ein Kugeltragbolzen (84, 86) ist.

4. Deckelmodul (10, 10') nach Anspruch 2 oder 3, **dadurch gekennzeichnet, dass** das Deckelmodul (10, 10') aus Kunststoff besteht und die Gewindehülse und/oder die Hülse einen Kugeltragbolzen (84, 86) in das Kunststoffmaterial eingearbeitet ist.

5. Deckelmodul (10, 10') nach einem der Ansprüche 1 bis 4, **dadurch gekennzeichnet, dass** das Deckelmodul (10, 10') eine rechteckige Grundform aufweist und die Befestigungsaufnahmen (18, 25a, 25b, 27a, 27b, 36a, 36b) in den Ecken angeordnet sind.

6. Deckelmodul (10, 10') nach einem der Ansprüche 1 bis 5, **dadurch gekennzeichnet, dass** Druck- und Kraftausgleichssegmente (28, 30) auf einer zur Batterie weisenden Seite vorgesehen sind, eine Vielzahl von miteinander verbundenen Stegen (32, 34) aufweisen.

7. Deckelmodul (10, 10') nach Anspruch 5, **dadurch gekennzeichnet, dass** die mit einander verbundenen Stege (32, 34) geschlossene Konturen aufweisen.

8. Deckelmodul (10, 10') nach Anspruch 6 oder 7, **dadurch gekennzeichnet, dass** die Druck- und Kraftausgleichssegmente (28, 30) auf der von der Batterie fortweisenden Seite einen vorstehenden Abschnitt (20, 22) bilden, der auf seiner zur Batterie weisenden Seite mit verbundenen Stegen (32, 34) gefüllt ist.

9. Deckelmodul (10, 10') nach Anspruch 8, **dadurch gekennzeichnet, dass** die vorstehenden Abschnitte (20, 22) Vertiefungen (24a-d) für die Verbindungsaufnahmen (36, 38) besitzen.

10. Deckelmodul (10, 10') nach einem der Ansprüche 1 bis 9, **dadurch gekennzeichnet, dass** zusätzlich mindestens eine Verbindungsaufnahme (38a, 38b) vorgesehen ist, durch die das Deckelmodul (10, 10') über ein Verbindungsmittel mit der Batterie lösbar verbunden werden kann.

11. Deckelmodul (10, 10') nach einem der Ansprüche 1 bis 10, **dadurch gekennzeichnet, dass** mindestens eines folgenden Zusatzelemente vorgesehen ist: eine oder mehrere Aufnahmen für elektrische Sicherungen (48, 50), eine Platine (56) und eine Dichtung für das Gehäuse.

12. Flurförderzeug mit einem Energiespeicher, dessen Deckelmodul (10, 10') nach einem der vorstehenden Ansprüche ausgebildet ist, **dadurch gekennzeichnet, dass** ein oder mehrere Pufferelemente (90a-c) vorgesehen sind, die in einer Betriebsposition gegen das Deckelmodul (10, 10') vorgespannt sind.
